# FASCICULE DE BREVET EUROPEEN

(11) **EP 1 337 412 B1**
(45) Date de publication et mention de la délivrance du brevet: **29.11.2006**
(21) Numéro de dépôt: 01986647.4
(22) Date de dépôt: 10.10.2001
(51) Int. Cl.: B60K 6/04, F02N 11/00, F16D 23/02, F16H 3/54, B60W 20/00

(54) **GROUPE MOTOPROPULSEUR HYBRIDE A DOUBLE COMMANDE POUR UN VEHICULE**
HYBRIDMOTORGETRIEBEEINHEIT MIT DOPPELSTEUERUNG FÜR EIN FAHRZEUG
DUAL-CONTROL HYBRID ENGINE-TRANSMISSION UNIT FOR A VEHICLE

(30) Priorité: 11.10.2000 FR 0012969
(43) Date de publication de la demande: 27.08.2003
(73) Titulaire: Renault s.a.s., 92100 Boulogne Billancourt (FR)
(72) Inventeur: FACCHIN, Sylvain, F-92600 Asnières (FR); GUIGNARD, Jean-Pierre, F-92500 Rueil Malmaison (FR)
(86) Numéro de dépôt international: PCT/FR2001/003131
(87) Numéro de publication internationale: WO 2002/030697

(56) Documents cités:
- DE-A- 2 500 760
- FR-A- 2 679 839
- FR-A- 2 786 137
- US-A- 5 285 111
- US-A- 5 569 108

## Description

L'invention concerne un groupe motopropulseur hybride pour un véhicule, comportant un moteur électrique et un moteur primaire.

Des applications de ce type de motorisation ont déjà été mises en oeuvre pour des navires, des locomotives ou des automobiles.

Les moteurs thermiques classiques (à pistons, à turbine à vapeur ou à gaz...) sont essentiellement utilisés pour leurs propriétés de bonne compacité et de grande autonomie. Ils présentent néanmoins de nombreux inconvénients. En particulier, ils émettent en permanence des gaz d'échappement. Cette émission de gaz polluants est singulièrement gênante pour un véhicule utilisé en milieu urbain. Il serait souhaitable de disposer d'un véhicule fonctionnant sur une alimentation électrique fournie par des batteries en milieu urbain et propulsé par un moteur thermique en dehors des villes, ce dernier rechargeant également les batteries électriques.

On connaît par le document FR-A1-2 679 839 un équipement moteur hybride pour faire tourner un arbre de sortie et qui comporte un moteur primaire, par exemple un moteur thermique ou un moteur électrique asynchrone, une machine électrique complémentaire, un train d'engrenages épicycloïdaux permettant de combiner la puissance de la sortie du moteur primaire et la puissance de la sortie de la machine électrique complémentaire pour asservir la puissance sur l'arbre de sortie. Un alternateur est couplé directement au moteur primaire. La fonction essentielle de la machine électrique complémentaire est d'ajuster la vitesse et le couple de l'arbre de sortie pendant que le moteur primaire fonctionne dans des conditions optimales. La machine électrique complémentaire peut fonctionner en générateur ou en moteur. Cette solution permet de réaliser une machine électrique complémentaire de puissance inférieure à la puissance maximale nécessaire sur l'arbre de sortie.

L'inconvénient de cette solution est que les modes de fonctionnement sont limités. En particulier, il n'est pas prévu de fonctionner uniquement avec le moteur thermique, le fonctionnement d'une machine électrique étant toujours indispensable pour transmettre le,couple du moteur thermique sur l'arbre de sortie.

L'invention a pour objectif de fournir un groupe motopropulseur hybride, fonctionnant d'une part avec un moteur primaire, d'autre part avec une machine électrique, et permettant de combiner les deux sources de puissance de manière simple pour entraîner un véhicule.

Avec cet objectif en vue, l'invention a pour objet un groupe motopropulseur hybride pour un véhicule, le groupe motopropulseur comportant un moteur primaire, une machine électrique, un arbre de sortie pour transmettre une puissance au véhicule, un réducteur auxiliaire entre le moteur primaire et l'arbre de sortie pour transmettre sur commande 1a puissance du moteur primaire sur l'arbre de sortie, le réducteur auxiliaire étant un train d'engrenages épicycloïdaux comportant une couronne, un planétaire et un porte-satellites lié à l'arbre de sortie, caractérisé en ce que la machine électrique est liée à l'arbre de sortie, la couronne est liée au moteur primaire, un frein liant sur commande le planétaire à un carter du réducteur auxiliaire, et un coupleur liant sur commande la couronne au planétaire.

Grâce à l'invention, on dispose d'un groupe motopropulseur comportant plusieurs modes de fonctionnement, obtenus en actionnant les commandes du frein et du coupleur. Il permet ainsi d'utiliser avantageusement un moteur primaire tel qu'un moteur thermique ou un moteur électrique asynchrone en combinaison avec la souplesse d'une machine électrique telle qu'une machine à courant continu alimentant ou alimentée par des batteries.

Lorsque ni le frein ni le coupleur ne sont actionnés, aucun couple n'est transmis par le moteur primaire sur l'arbre de sortie car la rotation du planétaire est entièrement libre. Dans ce cas, l'arbre de sortie, et donc le véhicule, est entraîné uniquement par la machine électrique, et le moteur primaire peut être coupé. Le véhicule peut être entraîné indifféremment en marche avant ou en marche arrière.

Lorsque le frein et le coupleur sont actionnés simultanément, le planétaire, la couronne et le porte-satellites sont bloqués en rotation. L'arbre de sortie est également bloqué et cette configuration est utilisable pour un frein de parking.

Lorsque le coupleur est actionné et le frein est libre, la couronne et le porte-satellite sont liés ensemble. Ils ont donc la même vitesse de rotation. L'arbre de sortie est alors entraîné en liaison directe par le moteur primaire. Le véhicule circule en marche avant grâce au moteur primaire et éventuellement avec un complément de puissance apporté par la machine électrique, par exemple pour le franchissement d'une côte ou pour un dépassement. Dans le cas d'un moteur thermique, si celui-ci délivre une puissance supérieure à celle nécessaire à l'entraînement du véhicule, la machine électrique absorbe cet excès de puissance en fonctionnant en générateur pour recharger les batteries. Ce cas de figure correspond en particulier à une utilisation du véhicule extra-urbaine, à vitesse stabilisée.

Lorsque le coupleur est libre et le frein est actionné, le planétaire est fixe. La rotation de la couronne, entraînée par le moteur primaire, est transmise au porte-satellites avec une réduction de vitesse. Le couple transmis sur l'arbre de sortie est plus important que dans le cas précédent, ce qui facilite l'accélération du véhicule à partir d'une vitesse basse ou le franchissement d'une côte de longueur importante.

Le moteur primaire est par exemple un moteur électrique asynchrone. Ce type de moteur est de construction simple, robuste et peu onéreuse. Par contre, il présente un faible couple à basse vitesse. Le groupe motopropulseur selon l'invention permet de compenser cet inconvénient avec une machine électrique présentant un couple important à basse vitesse.

De manière avantageuse, le moteur primaire est un moteur thermique. Il peut être par exemple du type moteur à pistons ou turbine.

Selon un premier perfectionnement, le moteur thermique est lié directement à un alternateur.

Ainsi, lorsque le frein et le coupleur sont désactivés, le moteur thermique et l'alternateur se comportent en groupe électrogène. Ce groupe électrogène fournit ainsi de l'électricité pour recharger les batteries du véhicule ou pour alimenter la machine électrique. Ce cas de fonctionnement, appelé mode série, est particulièrement intéressant lorsque le véhicule circule à faible vitesse. En effet, il est possible de faire fonctionner le moteur thermique à un régime ayant un rendement optimal et de bénéficier de toute la souplesse de démarrage et d'accélération de la machine électrique. Lorsque les batteries sont suffisamment rechargées, le moteur thermique peut être coupé et le véhicule fonctionner en mode purement électrique, la machine électrique étant alimentée par les batteries.

Selon un deuxième perfectionnement, le groupe motopropulseur comporte une transmission entre l'arbre de sortie et le véhicule pour transmettre la puissance au véhicule, et un mécanisme de découplage entre la transmission et l'arbre de sortie.

Ainsi, lorsque le véhicule est à l'arrêt, il est possible d'entraîner la machine électrique par le moteur thermique pour la faire fonctionner en générateur. Il n'est alors pas nécessaire de disposer d'un alternateur couplé au moteur thermique pour recharger les batteries à l'arrêt du véhicule. De même, la machine électrique fonctionnant en moteur permet d'entraîner le moteur thermique pour le démarrer.

Selon un premier mode de réalisation, le mécanisme de découplage est un système à crabots. Ce système, de conception simple et compacte, permet de coupler l'arbre de sortie et la transmission lorsqu'ils ont une vitesse nulle en rotation.

Pour effectuer le découplage, le véhicule doit être à l'arrêt. Quand le découplage est effectué, le frein ou le coupleur est activé pour que le moteur thermique entraîne en rotation l'arbre de sortie et la machine électrique. Comme le système à crabots est découplé, le véhicule n'est pas entraîné, il reste à l'arrêt. En commandant la machine électrique en générateur, la recharge des batteries s'effectue.

Lorsque l'on souhaite entraîner le véhicule, on libère le frein ou le coupleur qui était activé, on amène l'arbre de sortie à une vitesse nulle grâce à la machine électrique, on enclenche le système à crabots et on peut redémarrer.

Selon un deuxième mode de réalisation, le mécanisme de découplage est un embrayage. L'embrayage comporte par exemple un disque d'embrayage qui est serré entre deux flasques, le serrage étant commandé. Ainsi, le découplage entre l'arbre de sortie et la transmission n'est pas nécessairement effectué à vitesse de rotation nulle. De même, il n'est pas nécessaire que la vitesse de rotation de l'arbre de sortie soit nulle pour effectuer le démarrage du véhicule. En effet, l'entraînement relatif de l'arbre de sortie et de la transmission est progressif en fonction du serrage du disque d'embrayage par les flasques.

Selon un troisième perfectionnement, le réducteur auxiliaire comporte un double synchroniseur, le planétaire comporte un arbre de planétaire, le double synchroniseur coulissant sur l'arbre de planétaire pour, dans un premier sens de translation, être freiné sur le carter du réducteur, et dans le deuxième sens de translation, être couplé à la couronne et réaliser ainsi respectivement le frein et le coupleur. Ainsi, le frein et le coupleur sont commandés par un seul moyen de commande, selon le sens dans lequel ce dernier agit.

Selon un quatrième perfectionnement, le réducteur auxiliaire comporte un démarreur et le planétaire comporte une denture de démarrage pour engrener avec le démarreur et démarrer le moteur thermique. Dans ce cas, ni le frein ni le coupleur ne sont actionnés. Lorsque le véhicule est à l'arrêt, le porte-satellites est fixe. Le planétaire entraîné par le démarreur transmet un mouvement au moteur thermique par l'intermédiaire des satellites et de la couronne.

L'invention sera mieux comprise et d'autres particularités et avantages apparaîtront à la lecture de la description qui va suivre, la description faisant référence aux dessins annexés parmi lesquels :
- la figure 1 est un schéma fonctionnel d'un groupe motopropulseur hybride conforme à l'invention ;
- la figure 2 est une schéma fonctionnel du réducteur auxiliaire conforme à l'invention ;
- la figure 3 est un diagramme de vitesse du réducteur auxiliaire ;
- la figure 4 est un schéma fonctionnel d'un perfectionnement du réducteur auxiliaire ;
- la figure 5 est un schéma fonctionnel d'un embrayage ;
- la figure 6 est une vue en perspective d'un système à crabots.

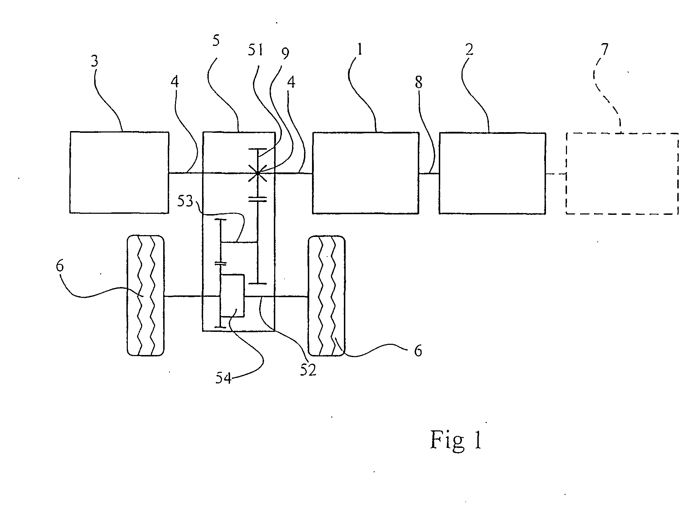

Un groupe motopropulseur conforme à l'invention, représenté sur la figure 1, comporte un réducteur auxiliaire 1, un moteur primaire 2 qui transmet sa puissance au réducteur auxiliaire 1 par un arbre d'entrée 8, un arbre de sortie 4 relié au réducteur auxiliaire 1 et ayant le même axe de rotation que l'arbre d'entrée 8, une transmission 5 et une machine électrique 3 reliés à l'arbre de sortie 4.

La transmission 5 comporte un premier élément de transmission 51 qui est destiné à être couplé à l'arbre de sortie 4, et un mécanisme de découplage 9 qui permet de coupler ou de découpler le premier élément de transmission 51 à l'arbre de sortie 4.

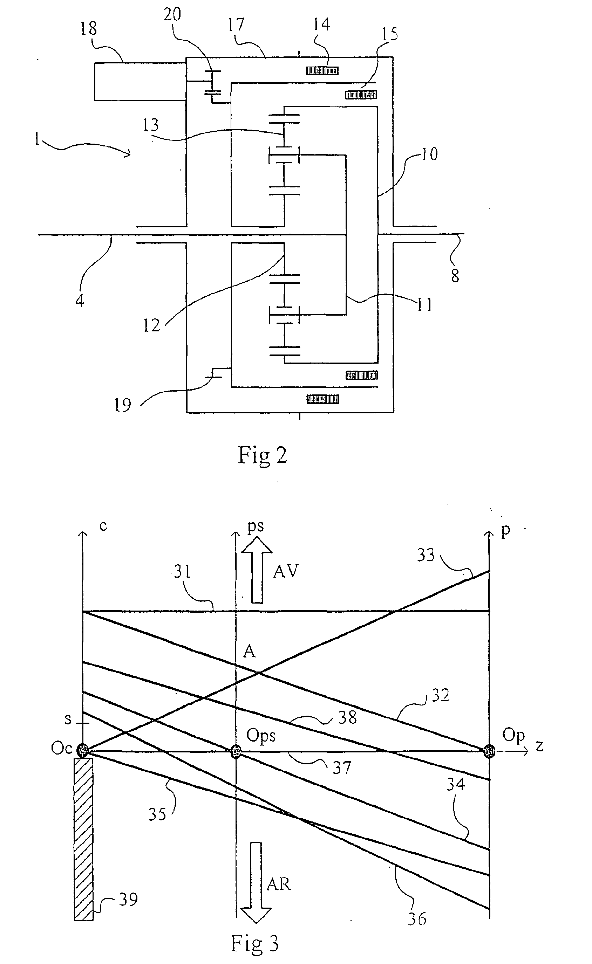

La transmission 5 comporte en outre un arbre de transmission 52 qui transmet une puissance aux roues 6 d'un véhicule pour entraîner le véhicule, non représenté. L'arbre de transmission 52 est entraîné, de manière directe ou indirecte, par le premier élément de transmission 51, par exemple sur la figure 2, par des engrenages parallèles 53 et un pont 54.

Le groupe motopropulseur est installé dans un véhicule avec une électronique de commande et des batteries, non représentées, pour alimenter ou être alimentées par la machine électrique 3.

Le réducteur auxiliaire 1 est montré sur la figure 2. Ce réducteur est un train à engrenages épicycloïdaux qui comporte un carter 17, un planétaire 12 monté rotatif dans le carter 17 et lié à l'arbre de sortie 4, un porte-satellites 11 ayant le même axe de rotation que le planétaire 12, des satellites 13 qui engrènent avec le planétaire 12 et dont les axes de rotation sont portés par le porte-satellites 11, et une couronne 10 à denture intérieure, liée à l'arbre d'entrée 8, et qui engrène avec les satellites 13. Le réducteur auxiliaire comporte en outre un frein 14 pour fixer le planétaire 12 au carter 17 et un coupleur 15 pour fixer la couronne 10 et le planétaire ensemble.

Un démarreur est fixé sur le carter 17. Il est par exemple du type à lanceur 20. Le planétaire 12 comporte une denture de démarrage 19 avec laquelle le lanceur 20 du démarreur 18 engrène pour démarrer le moteur primaire.

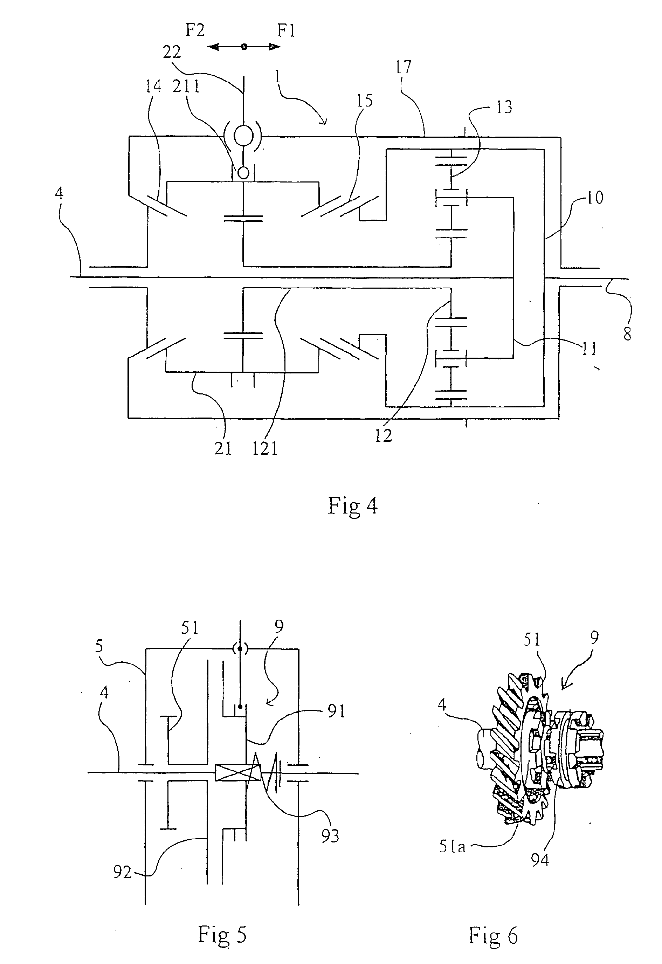

Le diagramme des vitesses de rotation des éléments du train à engrenages épicycloïdaux est représenté sur la figure 3. Ce diagramme comporte trois axes de vitesse c, ps et p correspondant aux vitesses de rotation respectivement de la couronne 10, du porte-satellites 11 et du planétaire 12. Un axe de zéro z coupe les axes de vitesse aux points Oc, Ops, Op de lecture de vitesse nulle. Les axes c et ps sont espacés d'une distance proportionnelle au nombre de dents de la couronne 10, tandis que les axes de vitesse ps et p sont espacés d'une distance proportionnelle au nombre de dents du planétaire 12.

Un point de fonctionnement du train à engrenages épicycloïdaux est représenté par un segment de droite reliant les axes de vitesse c et p en coupant l'axe ps. On lit les vitesses de rotation de chacun des éléments sur les axes p, ps et c à l'intersection du segment de droite. La vitesse du véhicule est liée à celle de l'axe ps, la marche avant AV étant dans le sens positif de l'axe ps, la marche arrière AR étant dans le sens contraire.

Lorsque le moteur primaire est un moteur thermique, il n'a qu'un seul sens de rotation. De ce fait, les vitesses de la zone 39 sur l'axe c ne sont pas accessibles. De plus, les moteurs thermiques comporte en général un seuil s minimal de vitesse de rotation en dessous duquel ils ne peuvent pas fournir de couple. Le seuil s est également représenté sur l'axe c.

Dans l'explication du fonctionnement qui va suivre, on considère que le mécanisme de découplage 9 est désactivé et que la rotation de l'arbre de sortie 4 entraîne celle des roues 6 du véhicule. En effet, le mouvement de l'élément de transmission 51 entraîne celle des engrenages parallèles 53, puis celle du pont 54 et de l'arbre de transmission 52. Cette explication est également la même si le mécanisme de découplage 9 n'existe pas et l'élément de transmission 51 est fixé directement sur l'arbre de sortie 4.

Si le frein 14 et le coupleur 15 sont activés, les vitesses de rotation du planétaire 12 et de la couronne 10 sont nulles. Le fonctionnement du réducteur auxiliaire 1 est représenté par le segment 37 sur la figure 3 qui passe par les points Oc (vitesse de la couronne nulle) et Op (vitesse du planétaire nulle). Le porte-satellites 11 est donc également arrêté en rotation.

Si le frein 14 n'est pas activé et le coupleur 15 est activé, la couronne 10 et le planétaire 12 forment un ensemble entraîné en rotation par le moteur primaire 2. Le fonctionnement du réducteur auxiliaire 1 est représenté par le segment 31. Le porte-satellites 11 tourne donc à la même vitesse de rotation que le moteur primaire 2.

Si le frein 14 est activé et le coupleur 15 n'est pas activé, le planétaire 12 est fixe par rapport au carter 17. La couronne 10, lors de sa rotation, entraîne celle des satellites 13 autour du planétaire 12 et donc celle du porte-satellites 11, à une vitesse moindre. Le fonctionnement du réducteur auxiliaire 1 est représenté par le segment 32 sur la figure 3. La vitesse de rotation du porte-satellites 11 est lue au point A d'intersection du segment 32 avec l'axe ps.

Lorsque ni le frein 14, ni le coupleur 15 ne sont actionnés, le planétaire 12 est libre en rotation. Si le moteur primaire 2 est à l'arrêt, le fonctionnement du réducteur auxiliaire 1 est représenté par les segments 33 et 35 qui passent par un point Oc sur l'axe c (vitesse nulle de la couronne 10). Le segment 33 correspond à une marche avant du véhicule, alors que le segment 35 correspond à une marche arrière, dans un mode purement électrique.

Si le moteur primaire 2 est en route, le fonctionnement du réducteur auxiliaire 1 est représenté par exemple par le segment 36 pour une marche arrière.

Pour effectuer un démarrage du moteur thermique 2. par le démarreur 18, le véhicule étant à l'arrêt, on alimente le démarreur 18 pour que le lanceur 20 s'avance et engrène avec la denture de démarrage 19. Le planétaire est alors entraîné en rotation. Comme le véhicule est l'arrêt, la vitesse de rotation du porte-satellites 11 est nulle. Le fonctionnement du réducteur auxiliaire 1 est symbolisé par le segment 34 sur la figure 3. Ce segment passe par le point Ops représentant la vitesse nulle du porte-satellites 11.

La recharge des batteries du véhicule est effectuée lorsque le moteur thermique 2 entraîne la machine électrique 3 et que celle-ci fonctionne en générateur. Cependant, la recharge est effectuée de manière plus souple selon les perfectionnements apportés au groupe motopropulseur.

Selon un premier perfectionnement, le groupe motopropulseur comporte un alternateur 7 directement entraîné par l'arbre d'entrée 8. La recharge des batteries est alors assurée par ledit alternateur 7 entraîné par le moteur thermique 2 par l'intermédiaire de l'arbre d'entrée. De préférence, le frein 14 et le coupleur 15 sont désactivés, de telle sorte que le moteur thermique 2 et l'alternateur 7 fonctionnent en groupe électrogène, à une vitesse de rotation indépendante de la vitesse du véhicule. Les segments 36 et 38 figurent un tel fonctionnement.

Le mécanisme de découplage 9, qui est un deuxième perfectionnement, permet d'utiliser la machine électrique 3 en générateur pour recharger les batteries lorsque le véhicule est à l'arrêt. Le dit mécanisme de découplage n'a pas d'utilité si le groupe motopropulseur comporte l'alternateur 7. Les phases de fonctionnement sont les suivantes. Le véhicule est arrêté. Le fonctionnement du réducteur auxiliaire est représenté par le segment 34. On active alors le mécanisme de découplage pour découpler l'élément de transmission 51 de l'arbre de sortie 4. On active alors soit le frein 14, soit le coupleur 15. Le fonctionnement est alors symbolisé respectivement par les segments 32 et 31.

Lorsque le coupleur 15 est activé, la vitesse de rotation de l'arbre de sortie 4, et donc celle de la machine électrique 3 est plus importante que lorsque le frein 14 est activé, ce qui permet d'obtenir une plus grande puissance pour le chargement des batteries. Cependant, la vitesse de rotation du planétaire 12 est importante. Lors du redémarrage du véhicule, il faut revenir au préalable au point de fonctionnement symbolisé par le segment 34, ce qui signifie une inversion du sens de rotation du planétaire 12. Le temps de transition est plus long que si le planétaire était initialement arrêté.

Le mécanisme de découplage 9 est réalisé par exemple par un embrayage, tel que représenté sur la figure 5. Cet embrayage comporte un disque d'embrayage 91 monté coulissant sur l'arbre de sortie 4. Il est maintenu appuyé par un ressort 93 contre un flasque 92 lié au premier élément de transmission 51. Le fonctionnement d'un tel embrayage est connu de manière classique.

Un autre mode de réalisation du mécanisme de découplage est un système à crabots, tel que représenté sur la figure 6. Un entraîneur 94 est monté coulissant sur l'arbre de sortie 4. Le premier élément de transmission 51 comporte un disque à crabots 51a. L'entraîneur 94 comporte également des crabots qui sont destinés à coopérer avec les crabots du disque à crabots 51a, pour lier en rotation l'entraîneur 94 et le premier élément de transmission 51.

Un perfectionnement du réducteur auxiliaire selon l'invention est montré sur la figure 4. Le réducteur comporte un train à engrenages épicycloïdaux avec un planétaire 12, une couronne 10, des satellites 13 et un porte-satellites 11. Le planétaire comporte un arbre de planétaire 121. Le réducteur auxiliaire comporte en outre un double synchroniseur 21 coulissant sur l'arbre de planétaire 121. Le double synchroniseur comporte le frein 14 et le coupleur 15. Il comporte en outre une gorge 211. Un levier 22 de commande est monté pivotant sur le carter 17 et comporte une extrémité 221. L'extrémité 221 s'engage dans la gorge 211.

Lorsque le levier 22 est dans une position neutre, ni le frein 14 ni le coupleur 15 ne sont activés. Lorsqu'une commande est donnée au levier 22 dans le sens de la flèche F1, le double synchroniseur 21 se déplace dans le sens opposé en coulissant sur l'arbre de planétaire pour que le frein 14 soit activé. Ainsi, le double synchroniseur 21 est lié en rotation avec le carter 17. De ce fait, le planétaire est également arrêté en rotation.

Lorsque le levier 22 est actionné dans le sens de la flèche F2, le double synchroniseur 21 se déplace dans le sens opposé en coulissant sur l'arbre de planétaire 121 pour que le coupleur 15 soit activé. De ce fait, le planétaire 12 et la couronne 10 sont liés en rotation.

## Revendications

1. Groupe motopropulseur hybride pour un véhicule, le groupe motopropulseur comportant
- un moteur primaire (2),
- une machine électrique (3),
- un arbre de sortie (4) pour transmettre une puissance au véhicule,
- un réducteur auxiliaire (1) entre le moteur primaire (2) et l'arbre de sortie (4) pour transmettre sur commande la puissance du moteur primaire (2) sur l'arbre de sortie (4), le réducteur auxiliaire (1) étant un train d'engrenages épicycloïdaux comportant une couronne (10), un planétaire (12) et un porte-satellites (11) lié à l'arbre de sortie (4),
**caractérisé en ce que** la machine électrique (3) est liée à l'arbre de sortie (4), la couronne (10) est liée au moteur primaire (2), un frein (14) liant sur commande le planétaire (12) à un carter (17) du réducteur auxiliaire (1), et un coupleur (15) liant sur commande la couronne (10) au planétaire (12).

2. Groupe motopropulseur selon la revendication 1, **caractérisé en ce que** le moteur primaire (2) est un moteur thermique.

3. Groupe motopropulseur selon la revendication 2, **caractérisé en ce que** le moteur thermique (2) est lié directement à un alternateur (7).

4. Groupe motopropulseur selon la revendication 1, **caractérisé en ce qu'**il comporte une transmission (5) entre l'arbre de sortie (4) et le véhicule pour transmettre la puissance au véhicule, et un mécanisme de découplage (9) entre la transmission (5) et l'arbre de sortie (4).

5. Groupe motopropulseur selon la revendication 4, **caractérisé en ce que** le mécanisme de découplage (9) est un système à crabots.

6. Groupe motopropulseur selon la revendication 4, **caractérisé en ce que** le mécanisme de découplage (9) est un embrayage.

7. Groupe motopropulseur selon la revendication 1, **caractérisé en ce que** le réducteur auxiliaire (1) comporte un double synchroniseur (21), le planétaire comporte un arbre de planétaire (121), le double synchroniseur (21) coulissant sur l'arbre de planétaire (121) pour, dans un premier sens de translation, être freiné sur le carter (17) du réducteur (1), et dans le deuxième sens de translation, être couplé à la couronne (10) et réaliser ainsi respectivement le frein (14) et le coupleur (15).

8. Groupe motopropulseur selon la revendication 2, **caractérisé en ce que** le réducteur auxiliaire (1) comporte un démarreur (18) et le planétaire (12) comporte une denture de démarrage (19) pour engrener avec le démarreur (18) et démarrer le moteur thermique (2).

## Claims

1. Hybrid power plant for a vehicle, the power plant comprising
- a primary engine (2),
- an electric machine (3),
- an output shaft (4) for transmitting a power to the vehicle,
- an auxiliary reduction gear (1) between the primary engine (2) and the output shaft (4) to transmit, on command, the power of the primary engine (2) to the output shaft (4), the auxiliary reduction gear (1) being an epicyclic gear train comprising a crown wheel (10), a sun gear (12) and a planet-carrier (11) connected to the output shaft (4),
**characterized in that** the electric machine (3) is connected to the output shaft (4), the crown wheel (10) is connected to the primary engine (2), a brake (14) connecting, on command, the sun gear (12) to a housing (17) of the auxiliary reduction gear (1), and a coupler (15) connecting, on command, the crown wheel (10) to the sun gear (12).

2. Power plant according to Claim 1, **characterized in that** the primary engine (2) is an internal combustion engine.

3. Power plant according to Claim 2, **characterized in that** the internal combustion engine (2) is directly connected to an alternator (7).

4. Power plant according to Claim 1, **characterized in that** it comprises a transmission (5) between the output shaft (4) and the vehicle to transmit the power to the vehicle, and a decoupling mechanism (9) between the transmission (5) and the output shaft (4).

5. Power plant according to Claim 4, **characterized in that** the decoupling mechanism (9) is a jaw clutch system.

6. Power plant according to Claim 4, **characterized in that** the decoupling mechanism (9) is a clutch.

7. Power plant according to Claim 1, **characterized in that** the auxiliary reduction gear (1) comprises a dual synchronizer (21), the sun gear comprises a sun gear shaft (121), the dual synchronizer (21) sliding on the sun gear shaft (121) in order, in a first direction of translation, to be braked on the housing (17) of the reduction gear (1), and in the second direction of translation, to be coupled to the crown wheel (10) and thus produce respectively the brake (14) and the coupler (15).

8. Power plant according to Claim 2, **characterized in that** the auxiliary reduction gear (1) comprises a starter (18) and the sun gear (12) comprises starter teeth (19) in order to mesh with the starter (18) and start the internal combustion engine (2).

## Patentansprüche

1. Hybrider Antriebsstrang für ein Fahrzeug, umfassend
- einen Antriebsmotor (2),
- eine elektrische Maschine (3),
- eine Ausgangswelle (4) zur Übertragung einer Leistung an das Fahrzeug,
- ein zwischem dem Antriebsmotor (2) und der Ausgangswelle (4) geschaltetes Hilfsgetriebe (1) für die Untersetzung zur gesteuerten Übertragung der Leistung des Antriebsmotors (2) an die Ausgangswelle (4), wobei das Hilfsgetriebe (1) für die Untersetzung ein Planetengetriebe ist, welches einen Zahnkranz (10), ein Planetenrad (12) und einen mit der Ausgangswelle (4) verbundenen Planetenträger (11) aufweist,
**dadurch gekennzeichnet, dass** die elektrische Maschine (3) mit der Ausgangswelle (4) verbunden ist, der Zahnkranz (10) mit dem Antriebsmotor (2) verbunden ist, wobei eine Bremse (14) das Planetenrad (12) gesteuert mit einem Gehäuse (17) des Hilfsgetriebes (1) für die Untersetzung verbindet und ein Koppler (15) den Zahnkranz (10) gesteuert mit dem Planetenrad (12) verbindet.

2. Antriebsstrang nach Anspruch 1, **dadurch gekennzeichnet, dass** der Antriebsmotor (2) eine Wärmekraftmaschine ist.

3. Antriebsstrang nach Anspruch 2, **dadurch gekennzeichnet, dass** die Wärmekraftmaschine (2) direkt mit einem Wechselstromgenerator (7) verbunden ist.

4. Antriebsstrang nach Anspruch 1, **dadurch gekennzeichnet, dass** er zwischen der Ausgangswelle (4) und dem Fahrzeug ein Getriebe (5) zur Übertragung der Leistung an das Fahrzeug und zwischen dem Getriebe (5) und der Ausgangswelle (4) einen Entkopplungsmechanismus (9) aufweist.

5. Antriebsstrang nach Anspruch 4, **dadurch gekennzeichnet, dass** der Entkopplungsmechanismus (9) ein Klauensystem ist.

6. Antriebsstrang nach Anspruch 4, **dadurch gekennzeichnet, dass** der Entkopplungsmechanismus (9) eine Kupplung ist.

7. Antriebsstrang nach Anspruch 1, **dadurch gekennzeichnet, dass** das Hilfsgetriebe (1) für die Untersetzung eine doppelte Synchronisiereinrichtung (21) aufweist, das Planetenrad eine Planetenradwelle (121) aufweist, wobei die doppelte Synchronisiereinrichtung (21) auf der Planetenradwelle (121) verschoben wird, um in einer ersten Verschiebungsrichtung am Gehäuse (17) des Hilfsgetriebes (1) für die Untersetzung gebremst und in der zweiten Verschiebungsrichtung mit dem Zahnkranz (10) gekoppelt zu werden und so die Bremse (14) bzw. den Koppler (15) zu realisieren.

8. Antriebsstrang nach Anspruch 2, **dadurch gekennzeichnet, dass** das Hilfsgetriebe (1) für die Untersetzung einen Starter (18) und das Planetenrad (12) eine Starterverzahnung (19) zum Eingriff mit dem Starter (18) und zum Starten der Wärmekraftmaschine (2) aufweist.
